# EUROPÄISCHE PATENTSCHRIFT

(11) **EP 3 048 437 B1**
(45) Veröffentlichungstag und Bekanntmachung des Hinweises auf die Patenterteilung: **13.05.2020**
(21) Anmeldenummer: 15152165.5
(22) Anmeldetag: 22.01.2015
(51) Int. Cl.: G01N 19/04

(54) **Vorrichtung und Verfahren zur Messung der Eisadhäsion auf festen Oberflächen**
Device and method for measuring the adhesion of ice on solid surfaces
Dispositif et procédé de mesure de l'adhérence de la glace sur des surfaces solides

(43) Veröffentlichungstag der Anmeldung: 27.07.2016
(73) Patentinhaber: Airbus Defence and Space GmbH, 85521 Ottobrunn (DE)
(72) Erfinder: Strobl, Tobias, 85521 Ottobrunn (DE); Bonaccurso, Elmar, 85521 Ottobrunn (DE); Hauk, Tobias, 85521 Ottobrunn (DE)
(74) Vertreter: Isarpatent

(56) Entgegenhaltungen:
- FR-A1- 2 997 188
- T STROBL ET AL: "Comparative Evaluation of Ice Adhesion Behavior", PROCEEDINGS OF WORLD ACADEMY OF SCIENCE, ENGINEERING AND TECHNOLOGY, Bd. 6, 29. August 2012 (2012-08-29), Seiten 1411-1416, XP055202844, Çanakkale
- HASSAN M F ET AL: "The variation of ice adhesion strength with substrate surface roughness", MEASUREMENT SCIENCE AND TECHNOLOGY, IOP, BRISTOL, GB, Bd. 21, Nr. 7, 25. Mai 2010 (2010-05-25), Seite 75701, XP020194424, ISSN: 0957-0233, DOI: 10.1088/0957-0233/21/7/075701
- GOHARDANI OMID ET AL: "Ice adhesion to pristine and eroded polymer matrix composites reinforced with carbon nanotubes for potential usage on future aircraft", COLD REGIONS SCIENCE AND TECHNOLOGY, Bd. 96, 1. Dezember 2013 (2013-12-01), Seiten 8-16, XP028766342, ISSN: 0165-232X, DOI: 10.1016/J.COLDREGIONS.2013.09.005
- KULINICH S A ET AL: "On ice-releasing properties of rough hydrophobic coatings", COLD REGIONS SCIENCE AND TECHNOLOGY, ELSEVIER, AMSTERDAM, NL, Bd. 65, Nr. 1, 1. Januar 2011 (2011-01-01) , Seiten 60-64, XP027542267, ISSN: 0165-232X [gefunden am 2010-12-01]
- STRUGGL STEPHAN ET AL: "A basic approach for wing leading deicing by smart structures", SENSORS AND SMART STRUCTURES TECHNOLOGIES FOR CIVIL, MECHANICAL, AND AEROSPACE SYSTEMS 2011, SPIE, 1000 20TH ST. BELLINGHAM WA 98225-6705 USA, Bd. 7981, Nr. 1, 24. März 2011 (2011-03-24), Seiten 1-10, XP060011459, DOI: 10.1117/12.880470 [gefunden am 1901-01-01]

## Beschreibung

Die Erfindung betrifft eine Testsektion mit einer Messvorrichtung zur Messung der Eisadhäsion auf festen Oberflächen sowie ein Verfahren zur Messung der Eisadhäsion an einer Oberfläche.

Die Bestimmung der Eishaftung bzw. der Eisadhäsion auf technisch relevanten Oberflächen (für Luft- und Raumfahrt, Schifffahrt, Windkraftanlagen, Hochspannungsleitungen, Bahn, usw.) ist von großer Bedeutung, vor allem um taugliche Strategien zu entwickeln, um Vereisung zu vermeiden, bzw. die Haftung des auf der Oberfläche aufwachsenden Eises zu reduzieren, um somit die Oberfläche von Eis zu befreien. Allerdings konnte sich vor allem wegen der Komplexität des Eiswachstumsprozesses und der Heterogenität der Oberflächen noch keine Standardmethode etablieren, die reproduzierbare und quantitative Messergebnisse liefert.

Die gegenwärtig verwendeten Techniken zur Bestimmung der Eishaftung an festen Oberflächen werden aufgrund der Geometrien und der gemessenen Größen in zwei Gruppen eingeteilt:
(i) Messung der Kraft in der Ebene der Materialoberfläche (Scherkraft), die notwendig ist, um die Eisschicht von der Oberfläche zu lösen und
(ii) Messung der Kraft vertikal zur Oberfläche (Zugkraft), die notwendig ist, um die Eisschicht von der Oberfläche zu lösen.Diese Verfahren haben den Nachteil, dass zunächst ein Angriffspunkt für die jeweilige Kraft geschaffen werden muss und dabei die Gefahr besteht, dass die Probe dadurch bereits verändert wird.

In der Veröffentlichung "T Strobl et al.: ,Comparative Evaluation of Ice Adhesion Behavior', PROCEEDINGS OF WORLD ACADEMY OF SCIENCE, ENGINEERING AND TECHNOLOGY, Bd. 6, 29. August 2012, Seiten 1411-1416" werden eine Vorrichtung und ein Verfahren zur Bestimmung der Eisadhäsion an einer Oberfläche beschrieben. Die Vorrichtung umfasst einen Probenstab und eine Rütteleinrichtung, in welche ein Ende des Probenstabs einspannbar ist. Weiterhin ist an dem Probenstab ein Dehnungsmessstreifen zur Bestimmung des Schwingungsverhaltens des mit der Rütteleinrichtung angeregten Probenstabs angebracht. Zunächst erfolgt ein Vereisen des in der Rütteleinrichtung eingespannten Probestabs dadurch, dass die Oberfläche des Probestabs in einer Gefriertruhe auf eine Temperatur von etwa -16°C gebracht und unterkühltes Wasser auf die Oberfläche gesprüht wird. Hierbei wird eine Seite des Probenstabs mittels einer PVC-Form eisfrei gehalten. Nach Ausbildung der Eisschicht wird der Stab mit der Rütteleinrichtung gerüttelt, bis eine Delamination des Eises detektiert wird. Ein ähnliches Verfahren und eine ähnliche Vorrichtung sind außerdem aus der Veröffentlichung "Hassan M. F. et al.: ,The variation of ice adhesion strength with substrate surface roughness', MEASUREMENT SCIENCE AND TECHNOLOGY, IOP, BRISTOL,GB, Bd. 21, Nr. 7, 25. Mai 2010, Seite 75701" bekannt.

Das Dokument FR 2 997 188 A1 beschreibt eine Messvorrichtung mit zwei Stäben, die jeweils mit einem ersten Ende drehbar an einer Platte aufgehängt sind und in einen Strömungskanal hineinragen. Nahe des ersten Endes der Stäbe liegen diese jeweils an einem Anschlag an. An einem zweiten Ende der Stäbe sind jeweils Stößel zur Verformung der Stäbe vorgesehen. Die Stäbe werden in dem Strömungskanal vereist, anschließend erfolgt eine Verformung der Stäbe mit den Stößeln. Dabei wird die Verformung der Stäbe gemessen und eine Delamination des Eises ermittelt.

In der Veröffentlichung "Gohardani Omid et al.: ,Ice adhesion to pristine and eroded polymer matrix composites reinforced with carbon nanotubes for potential usage on future aircraft', COLD REGIONS SCIENCE AND TECHNOLOGY, Bd. 96, 1. Dezember 2013, Seiten 8-16" wird ferner eine Messvorrichtung mit einer plattenförmigen Messprobe, einer Scherungseinheit mit einem Halter zur Aufnahme der Messprobe und einem Druckstück beschrieben. Die Messprobe wird in dem Halter der Schereinheit angeordnet und deren Oberfläche vereist. Anschließend wird mit dem Druckstück eine Scherkraft entlang der Oberfläche der Messprobe auf die Eisschicht aufgebracht, bis eine Delamination erfolgt
Es ist die Aufgabe der Erfindung eine Vorrichtung und ein Messverfahren zu finden, womit die experimentelle Bestimmung der Haftung von Eis an einer Oberfläche vereinfacht und verbessert wird.

Diese Aufgabe wird durch eine Testsektion mit den Merkmalen des Anspruchs 1 und dem entsprechenden Verfahren gemäß Anspruch 4 gelöst. Vorteilhafte Ausführungsformen ergeben sich aus den abhängigen Ansprüchen.

Die Testsektion weist eine Messvorrichtung zur Messung der Eisadhäsion auf Oberflächen auf, welche einen Probenhalter zur Aufnahme einer die zu vermessende Oberfläche umfassenden Messprobe, einen Verformungsbewirker in Form eines einen mit dem Probenhalter gekoppelten Schwingkörper aufweisenden Schwingungserregers zur Verformung der Messprobe und eine Sensoreinrichtung zur Messung einer durch die Verformung bewirkten Delamination einer auf der Messprobe aufgebrachten Eisschicht umfasst.

Der Begriff "Verformungsbewirker" steht in einer allgemeinen Form für Vorrichtungen, die insbesondere entweder über eine direkte Krafteinwirkung die Messprobe verbiegen oder bei der die Messprobe an mehreren Stellen eingespannt ist und diese Einspannpunkte so verschoben werden, dass sich eine Verformung der Messprobe ergibt oder bei der die Einspannpunkte entsprechend verdreht, verwunden oder winkelmäßig verändert ausgerichtet werden, so dass es zu einer Delamination des Eises von der Oberfläche kommt. Auch die nachfolgend detailliert beschriebene Verformung der Messprobe durch Aufbringung einer oszillierenden Bewegung fällt hierunter.

Die Verformung einer Messprobe kann technisch einfach realisiert werden. Dadurch lässt sich eine hohe Reproduzierbarkeit erreichen. Auch muss anders als bei oben genannten Verfahren der Adhäsionsmessung die Messprobe und/oder Vereisung nicht berührt oder bearbeitet werden, so dass hierdurch bewirkte Einflüsse auf die Grenzschicht Eis/Messprobe wegfallen. Auf diese Art ist es möglich, eine quantitative Messgröße zu erhalten, die reproduzierbar ist und so können unterschiedliche Materialien oder Materialbeschichtungen einfach verglichen werden.

Die Messvorrichtung umfasst einen Schwingungserreger zur Erzeugung einer oszillierenden Bewegung. Insbesondere kann die Frequenz der oszillierenden Bewegung derart einstellbar sein, dass sie der Eigenfrequenz der untersten oder einer höheren Ordnung einer in der Messvorrichtung aufgenommenen Messprobe entspricht. Bevorzugt ist hierfür eine oszillierende Wellenform, insbesondere Transversalwellen. Bevorzugt ist die Verformung in diesem Fall im Bereich einer elastischen Verformung und nicht im Bereich einer plastischen Verformung. Bei alternativen Ausführungsformen kann eine plastische Verformung gewünscht sein, um so bereits bei einer einmaligen Verformung in einer Richtung ein großflächiges Abplatzen des Eises zu zielen. Zur Schwingungserzeugung eignen sich Antriebe mit einem Exzenter oder unter Verwendung der Massenträgheit oder Piezoelemente bzw.

Piezoaktuatoren. Die Verformungsrichtung ist bevorzugt senkrecht zur Messflächenoberfläche. Da im Eigenfrequenzbereich eine geringe Anregung eine große Verformung bewirkt, kann dadurch die benötigte Verformung einfach realisiert werden.

Insbesondere ist die Messvorrichtung eingerichtet, die Messprobe innerhalb eines Vereisungswindkanals zu positionieren und eine Messung der delaminierten oder delaminierenden Eisschicht dann durchzuführen, wenn die Messprobe sich innerhalb des Vereisungswindkanals befindet. Dieser Test ist somit ohne den Ausbau der Messprobe aus dem Vereisungswindkanal durchführbar. Die Messvorrichtung ist Teil der Testsektion. Die Testsektion kann aufgrund ihrer Anschlussbereiche leicht in einen Vereisungswindkanal eingebaut bzw. ausgetauscht werden. Über die Testsektion ist es auch möglich, einfach und schnell den Strömungskanal auf unterschiedliche Prüftests umzurüsten. Bei der Verwendung eines optischen Sensorverfahrens können eine Kamera und ggf. eine Strahlungs- oder Beleuchtungsquelle (Licht/Laser) außerhalb des Strömungskanals angeordnet sein. Aufgrund des Verbleibens der Messprobe in dem Vereisungswindkanal kann die Messung unter den gewünschten Temperatur-, Druck- und Feuchtebedingungen realisiert werden, was ein für realistische Messergebnisse vorteilhaft ist. So können die Bedingungen während des Fluges eines Flugzeugs sehr gut abgebildet werden. Bei dem aus dem Stand der Technik bekannten Herausnehmen von den Prüfkörpern aus der Prüfkammer konnte es zu mechanischen oder thermischen Schocks kommen, wodurch die Messergebnisse gegebenenfalls verfälscht wurden en.

Es wurde erkannt, dass der kritischste Punkt, der die Vergleichbarkeit der gemessenen Größen in den meisten Fällen verhindert, der Eiswachstumsprozess ist. Die meisten vorbekannten Messungen wurden mit sogenanntem "laboratory ice" durchgeführt, d.h. in einem Gefrierschrank wird eine Eisschicht oder einen Eisblock bei einer definierten Temperatur durch das Gefrieren einer definierten Menge Wasser auf einer Oberfläche erzeugt, bzw. durch das Besprühen der Oberfläche mit Wassertröpfchen. Üblicherweise werden selten Messungen mit sogenanntem "atmospheric ice" durchgeführt, d.h. Eis, welches in einem Vereisungswindkanal bei definierten Umgebungsbedingungen wie Temperatur, Druck, Luftströmungsgeschwindigkeit, Tropfengröße und Wassergehalt auf eine Oberfläche aufgebracht wird. Die gemessenen Kräfte unterscheiden sich oft um mehr als eine Größenordnung, großteils wegen der unterschiedlichen Eiswachstumsbedingungen, aber auch teils weil die gemessenen Größen veränderlich sind. Durch das Messen in der Klimakammer kann mit "atmospheric ice" gearbeitet werden, das keinen Temperaturschwankungen ausgesetzt ist.

Die Messvorrichtung umfasst einen Probengegenhalter, der eine mittige Vertiefung in Form einer Längsaussparung aufweist, deren Breite geringfügig breiter ist als die Breite der bestimmungsgemäß in der Messvorrichtung verwendbaren Messprobe. So kann die Messprobe ohne zu große seitliche Spalte in der Vertiefung aufgenommen werden. Zu große seitliche Spalte wären Irregularitäten, die einen Einfluss auf die Umströmung und somit auf die Eisakkumulation auf der Oberfläche der zu vermessenden Probe ausüben könnten.

Ferner weist die Längsaussparung des Probengegenhalters eine Tiefe auf, die im Wesentlichen der Dicke der bestimmungsgemäß in der Messvorrichtung verwendbaren Messprobe entspricht. So kann die Messprobe in dem Probengegenhalter aufgenommen werden, ohne dass es einen Höhenversatz gibt. Ein derartiger Höhenversatz wäre eine Irregularität, die einen Einfluss auf die Umströmung und somit auf die Eisablagerung ausüben könnte.

Der Probengegenhalter ist für den Zeitraum des Aufbringens der Eisschicht auf die zu vermessende Oberfläche der Messprobe derart in Kontakt zu der Messprobe bringbar, dass die Messprobe in die Längsaussparung eingesetzt ist, und für das Messen der Eisadhäsion in einen Abstand zu der Messprobe bringbar. Hierdurch wird zunächst das Durchbiegen oder eine Schwingungsbelastung der Messprobe durch die von der Strömung bewirkten aerodynamische Lasten auf der Probe während der Vereisung verhindert. Bevorzugt sind der Probengegenhalter und der nachstehend erläuterte Probenhalter, mit dem die Messprobe eingespannt ist, unterschiedliche Teile. So wird es möglich, dass der Probengegenhalter von der Messprobe weggeführt wird, ohne dass die Messprobe selbst in ihrer Lage verändert wird. So lässt sich mit einer nicht bewegten Messprobe unverzüglich nach dem Aufbringen des Eises die Adhäsionsmessung durchführen, damit störende Einflussfaktoren bestmöglich ausgeschlossen werden konnten.

Die Testsektion umfasst ferner einen ersten Flansch, einen zweiten Flansch, einen sich zwischen den Flanschen erstreckenden rechteckförmigem Kanal, eine an einer Seite des Kanals angebrachte vordere entfernbare Abdeckung aus einem durchsichtigen Material und eine an einer gegenüberliegenden Seite des Kanals angebrachte hintere entfernbaren Abdeckung aus einem durchsichtigen Material, wobei der Schwingungserreger an der vorderen Abdeckung angebracht ist und wobei der Probenhalter durch die vordere Abdeckung in den Kanal hineinragt.

Weiter ist der Probengegenhalter über eine Verschiebebewegung des Probengegenhalters relativ zur Messprobe in Kontakt mit der Messprobe bringbar und entfernbar. Insbesondere kann diese Verschiebebewegung das Lösen einer Klemmung oder Rastung umfassen. Hierdurch kann mit einfachen Mitteln von der Phase des Vereisens zu der Phase des Adhäsionstests umgeschaltet werden. Anders als bei dem Vereisen ist es nämlich für das Testen der Adhäsion wichtig, dass eine Beweglichkeit für die Messprobe gewährleistet ist.

Der Probengegenhalter ist in Kanalquerrichtung zwischen einer Position, in welcher der Probengegenhalter mit der Messprobe in Kontakt ist, und einer Position verschiebbar, in welcher der Probegegenhalter weitestgehend aus dem Kanal entfernt ist und zwischen der Messprobe und der hinteren Abdeckung ein Spalt vorhanden ist, sodass die Messprobe nach ihrer Anregung frei schwingen kann.

Die Messvorrichtung umfasst außerdem eine optische Detektionseinheit zur Messung einer Dicke einer auf der Messprobe aufgebrachten Eisschicht mit einem Sender und einem Empfänger. Ein optisches Messsystem hat den Vorteil, dass es berührungsfrei arbeitet und somit die Messprobe nicht beeinflusst. Ferner kann aufgrund des möglichen Abstands das Detektionssystem außerhalb der Kältekammer oder -kanals angeordnet sein.

Ferner umfasst die Messvorrichtung eine elektrische Sensoreinrichtung zur Bestimmung einer durch die Verformung bewirkten Delamination der auf der Messprobe aufgebrachten Eisschicht durch Erfassung einer Dehnung der Messprobe, wobei die elektrische Sensoreinrichtung dazu eingerichtet ist, die bei Schwingungsanregung erzeugten Dehnungen auf einer nicht vereisten Oberfläche der Messprobe zu erfassen und in ein elektrisches Signal umzuwandeln.

Zusätzlich kann die Messvorrichtung eine Temperaturmessvorrichtung aufweisen, insbesondere zur Messung der Temperatur einer aufgenommenen Messprobe. Da die Temperatur eine wichtige Einflussgröße auf die Adhäsionskraft des auf der Probenoberfläche aufgewachsenen Eises ist, können hierdurch einfach aussagekräftige Messwerte erlangt werden.

Das erfindungsgemäße Verfahren zur Messung der Eisadhäsion an einer Oberfläche wird mittels der voranstehend beschriebenen Testsektion durchgeführt, wobei die Testsektion über die Flansche in einen Vereisungswindkanal eingebaut ist. Das Verfahren umfasst die folgenden Verfahrensschritte:
Einbringen der Messprobe in den sich zwischen den Flanschen erstreckenden rechteckförmigem Kanal, wobei die Messprobe an einem äußeren Ende in den Probenhalter eingespannt wird;
Anlegen des Probengegenhalters an eine erste Oberfläche der Messprobe durch Verschieben des Probengegenhalters in Kanalquerrichtung, wobei die Messprobe in die Längsaussparung des Probengegenhalters eingesetzt wird;
Einstellen von Bedingungen in dem Vereisungswindkanal derart, dass eine Eisschicht auf einer entgegengesetzt zu der ersten Oberfläche orientierten zweiten Oberfläche der Messprobe aufwächst;
Entfernen des Probengegenhalters von der Messprobe, durch Verschieben des Probegegenhalters in Kanalquerrichtung, sodass zwischen der Messprobe und der hinteren Abdeckung ein Spalt vorhanden ist, um eine freie Schwingung der Messprobe zu erlauben und einen Kontakt zwischen dem Probengegenhalter und der Messprobe aufzuheben; Erfassen der Dicke und einer Kontur der auf der Messprobe aufgewachsenen Eisschicht mittels der optischen Detektionseinheit;
Verformen der Messprobe durch Einbringen von Schwingungen in die Messprobe mittels des Schwingungserregers derart, dass eine Delamination der Eisschicht von der zweiten Oberfläche der Messprobe stattfindet, wobei die Schwingung bei konstanter, vorab determinierter Resonanzfrequenz der vereisten Messprobe der ersten oder einer höheren Ordnung eine ansteigende Amplitude aufweist;
Bestimmen der Delamination der auf der zweiten Oberfläche der Messprobe aufgewachsenen Eisschicht durch Erfassung einer Dehnung der Messprobe mittels der elektrischen Sensoreinrichtung; und
Berechnen der Adhäsion zwischen der zweiten Oberfläche der Messprobe und der darauf aufgewachsenen Eisschicht auf Basis der erfassten Dehnung der Messprobe und der erfassten Dicke und Kontur der aufgewachsenen Eisschicht.

Im Folgenden wird ein bevorzugtes Ausführungsbeispiel der Erfindung anhand von schematischen Darstellungen näher erläutert. Es zeigen:
Fig. 1 : eine perspektivische Ansicht einer Testsektion mit einer Messvorrichtung,
Fig. 2 : die Testsektion der Fig. 1 in einer gedrehten Ansicht,
Fig. 3 : die Messvorrichtung während des Vereisungsvorgangs,
Fig. 4 : die Messvorrichtung im Zustand während der Messung,
Fig. 5 : einen Probenhalter mit einer eingespannten Messprobe,
Fig. 6 : einen Probengegenhalter, mit einer in ihm geführten Messprobe,
Fig. 7a und b : unterschiedliche Vereisungszustände abhängig davon, ob ein Probengegenhalter verwendet wurde,
Fig. 8 : eine optische Messvorrichtung zur Messung der Dicke der Vereisung und
Fig. 9 : eine schematische Darstellung des Messprinzips.

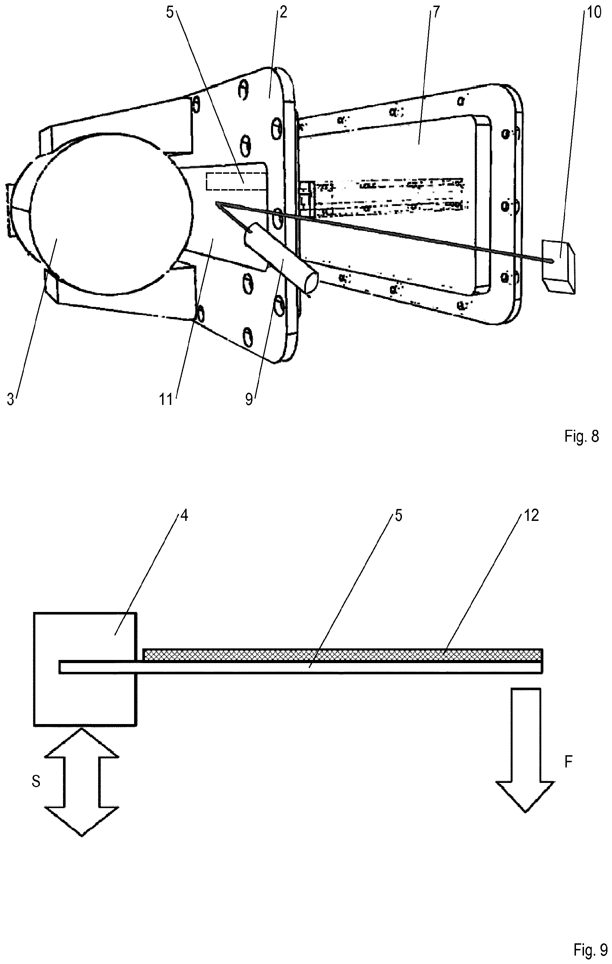

Vor der Beschreibung der bevorzugten Ausführungsform wird das Messprinzip näher erläutert, wie es in Fig. 9 dargestellt ist. Es ist eine Einspannung, bzw. ein Probenhalter 4 gezeigt, in welcher eine Messprobe 5 eingespannt ist. Die Messprobe ist streifenförmig, d.h. ihre Breite ist in bevorzugter Ausführungsform mindestens 3 mal größer als ihre Dicke, so dass sich eine Fläche ergibt, auf der Eis 12 aufwachsen kann. Zur Messung der Adhäsion des Eises 12 kann bei einer Ausführungsform eine mechanische Kraft F an dem freien Ende der Messprobe 5 angreifen, durch die das Messprobenende wahlweise und/oder wechselnd nach unten oder oben ausgelenkt wird. Aufgrund der unterschiedlichen Elastizitätsmoduli des Eises 12 und des Werkstoffs der Messprobe 5 ergibt sich an der Grenzschicht zwischen dem Eis 12 und der Messprobe 5 eine Scherspannung. Da die Scherspannung in der Adhäsionsebene liegt, platzt dort das Eis 12 ab. Es können wahlweise oder gemeinsam der Zeitpunkt, der Umfang und die Lage des Abplatzens über Sensoren aufgenommen werden. Diese Messwerte gelten als Maßstab für die Adhäsionskraft des Eises 12 an der Oberfläche der Messprobe 5. Die Verformung der Messprobe geschieht bevorzugt ausschließlich im Bereich der elastischen Verformung, also ohne eine dauerhafte plastische Verformung der Messprobe 5. Es hat sich gezeigt, dass bei einer einmaligen Verformung teilweise die auf der Probenoberfläche akkumulierte Vereisung 12 nicht unmittelbar delaminiert. So wird bevorzugt eine oszillierende Auslenkung durch einen Richtungswechsel der Kraft F der Auslenkung veranlasst. Ab einer gewissen Anzahl der Auslenkungen der Messprobe 5 wird die auf der Probenoberfläche akkumulierte Vereisung 12 delaminierenund dient dann (wie beschrieben) als Messwert für die Adhäsisonskraft in der Grenzfläche zwischen der Vereisung 12 und der Oberfläche der Messprobe 5. Alternativ zu der Kraft F, die am freien Ende der Messprobe 5 angreift, kann der Probenhalter 4 mit einer oszillierenden Bewegung s beaufschlagt werden, so dass die in dem Probenhalter 4 eingespannte Messprobe 5 in Schwingung gerät. Hierfür wird bevorzugt mit der Eigenfrequenz der Messprobe 5 angeregt. Alternativ zu der in Fig. 9 gezeigten Lateralbewegung s, kann eine oszillierende Drehbewegung auf den Probenhalter 4 ausgeübt werden, um die beschriebene Schwingung der Messprobe 5 zu bewirken.

In einem Beispiel, das nicht Teil der Erfindung ist, ist das von der Einspannung der Messprobe 5 im Probenhalter 4 entfernte Ende der Messprobe 5 ebenfalls eingespannt (nicht in den Figuren gezeigt) und über eine Verschiebung beider Einspannungsorte zueinander und/oder durch ein Verdrehen der Einspannorte zueinander wird eine Verformung der Messprobe 5 verursacht, wodurch die beschriebene Delamination der Vereisung bewirkt wird. Auf die vorstehend genannten Arten kann die gewünschte Verformung der eingespannten Messprobe 5 erreicht werden.

Zur Erzeugung der beschriebenen Schwingungen kann ein Inertialmassenschwinger oder ein Inertialkraftgenerator verwendet werden. Auch kann über einen Exzenter-Antrieb der Probenhalter 4 in eine entsprechende Schwingung versetzt werden. Für den Antrieb eignet sich insbesondere auch ein piezoelektrischer Aktuator, oder ein Permanentschwinganreger, wie aus der Literatur bekannt.

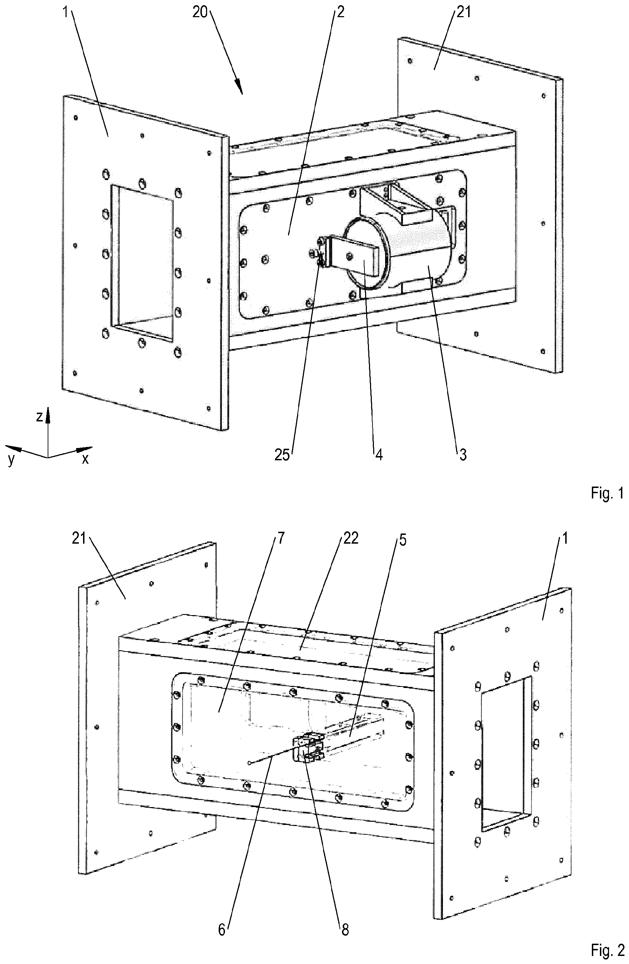

Fig. 1 zeigt eine Testsektion 20 mit einem vorderen Flansch 1 und einem hinteren Flansch 21. Über diese Flansche wird die Testsektion 20 in einen (Kälte-)Strömungskanal eingebaut. Der Strömungskanal (nicht gezeigt) umfasst einen Ventilator, um einen geschlossenen Luftkreislauf zu realisieren. Zudem ist der Kältekanal über einen Wärmetauscher mit einer Kältemaschine verbunden, um die Luft im Luftkreislauf zu kühlen. Ferner ist ein Befeuchter bzw. ein Sprühsystem in den Luftkreislauf integriert, um eine gewünschte Luftfeuchtigkeit bzw. Tropfengröße einzustellen. Der Befeuchter besteht bspw. aus einer Vielzahl von Düsen, die kleinste Wassertropfen mit bspw. einem mittleren Tropfendurchmesser in einem Bereich zwischen 5 und 200 µm, und insbesondere Wassertropfen mit einem mittleren Tropfendurchmesser von 15 bis 50 µm, und in bevorzugtester Ausführungsform Wassertropfen mit einem mittleren Tropfendurchmesser von 20 µm, abgeben. Auch ist die Einstellung größerer Wassertropfen für sogenannte "Supercooled Large Droplets (SLD)" mit dem Sprühsystem möglich, um auch durch SLDs bedingte diese Vereisungsfälle simulieren zu können und damit die Eishaftung zwischen der Vereisung 12 durch SLDs und der Messprobe 5 mit dem beschriebenen Messverfahren zu bestimmen. Zudem umfasst der Vereisungswindkanal Sensoren, um die Luftgeschwindigkeit, die Temperatur und die Feuchte zu messen, und um somit reproduzierbare Bedingungen zu schaffen. Zwischen den Flanschen 1 und 21 befindet sich ein rechteckförmiger Kanal, der im Querschnitt dem Kältekanal entspricht. An gegenüberliegenden Seiten des Kanals sind entfernbare Abdeckungen 2 und 7 angebracht. An einer dieser Abdeckungen, nämlich der vorderen Abdeckung 2, ist ein Schwingungserreger 3 angebracht.

Der Schwingungserreger 3 hat einen Schwingkörper, um Vibrationen in x-Richtung (siehe Fig. 1) zu erzeugen. Der Probenhalter 4 ist an dem Schwingkörper gekoppelt und er ragt durch die Abdeckung 2 in den Kanal. Optional kann der Probenhalter 4 an einem Drehpunkt 25 schwenkbar an der vorderen Abdeckung 2 gelagert sein, so dass die Lateralbewegung des Schwingungserregers 3 in eine oszillierende Schwenkbewegung des Probenhalters 4 und somit der Messprobe 5 um die z-Achse gewandelt wird.

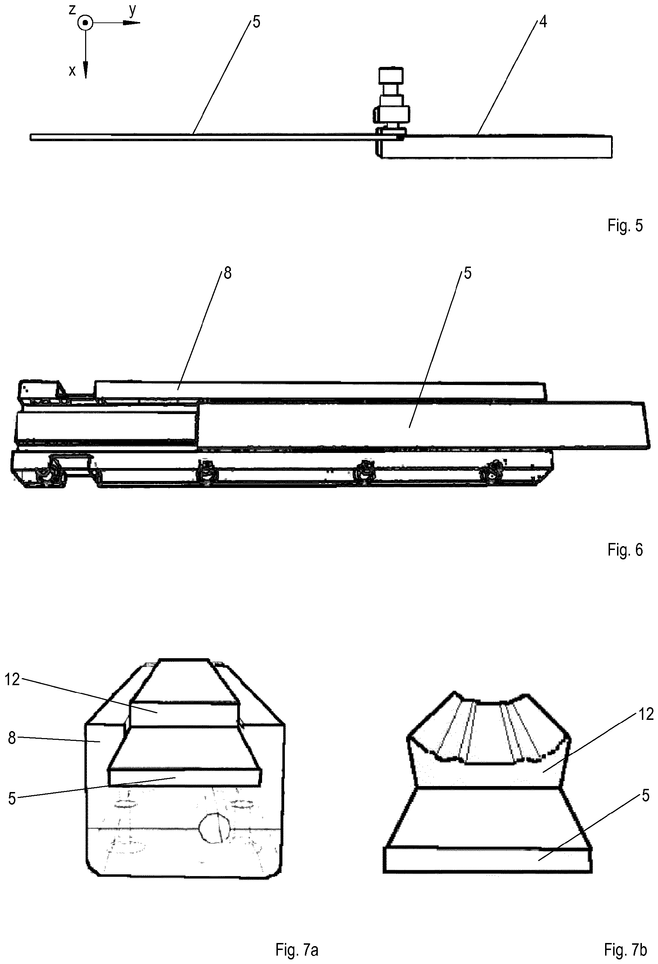

Die genannte Einspannung der Messprobe 5 in den Probenhalter 4 ist in Fig. 5 gezeigt. Die Einspannung befindet sich am äußeren Ende der Messprobe, um so einen möglichst langen Abschnitt der Messprobe 5 zu ermöglichen, in dem sie frei schwingen kann.

Während des Vereisungsvorgangs soll die Messprobe 5 nicht mechanischen Belastungen, wie etwa durch die Luftströmung ausgesetzt sein. Hierdurch könnte sich die Probe durchbiegen oder zu einer Vibration angeregt werden. Aus diesem Grund liegt sie während des Vereisens auf dem Probengegenhalter 8 auf. Wie es in Fig. 6 gezeigt ist, umfasst der Probengegenhalter 8 eine Nut, in welcher die Messprobe 5 geführt wird. Der Probengegenhalter 8 hat, wie bereits erwähnt, die Aufgabe ein Verbiegen der Messprobe 5 während des Vereisungsvorgangs zu verhindern. Zudem ragt sie seitlich (in z-Richtung) über die Messprobe 5 hinaus, was die Umströmungsbedingungen beeinflusst. Dieser Effekt ist in der Zusammenschau der Fig. 7a und 7b ersichtlich. Die Formgebung des Probengegenhalters 8 ermöglicht das Aufwachsen einer konstanten und homogenen Eisschicht 12 auf der Messprobe 5. Die zu vereisende Messprobe 5 wird in der Längsaussparung des Probengegenhalters positioniert. Dadurch wird vermieden, dass am Rand der Messprobe 5 aerodynamische Abrisskanten während des Vereisungsvorgangs vorliegen, welche zu Unregelmäßigkeiten bei der Eisbildung führen können. Bei der Messprobe 5 gemäß Fig. 7b wurde kein Probengegenhalter verwendet, was im Ergebnis eine im Querschnitt ungleichmäßige Eisform und eine erhöhte Eisdicke an den Probenrändern verursacht hat.

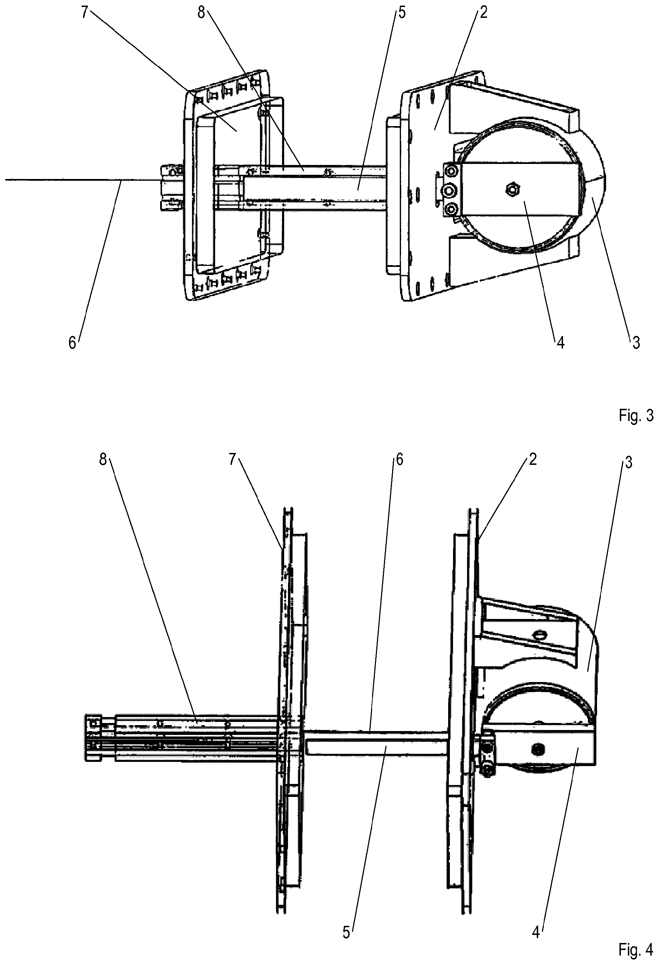

In Fig. 3 ist die Messvorrichtung mit einer vorderen Abdeckung 2 und einer hinteren Abdeckung 7 gezeigt, wie dies dem Einbau in der Testsektion 20 entspricht. Dabei ist die Messprobe 5 in Kontakt mit dem Probengegenhalter 8. So ist der Zustand gezeigt, in dem die Messprobe 5 mit Eis beschichtet wird. Der Probengegenhalter 8 ist in Strömungskanalquerrichtung, also von der Messprobe 5 weg, verschiebbar. Fig. 4 zeigt, dass der Probengegenhalter 8 in diesem Sinne weitestgehend aus dem Strömungskanal entfernt ist. Zwischen der Messprobe 5 und der hinteren Abdeckung 7 ist ein Spalt, so dass die Messprobe 5 nach ihrer Anregung frei schwingen kann.

Zudem zeigen Fig. 3 und 4 eine Stützschiene 6, die an der vorderen Abdeckung 2 befestigt ist und durch den Strömungskanal reicht und ihn auf der Seite der hinteren Abdeckung 7 verlässt. Diese Stützschiene ist im einfachsten Fall ein steifer gerader Draht, Stift oder Bolzen, der in einer Bohrung des Probengegenhalters 8 verläuft und dafür sorgt, dass der Probengegenhalter 8 stets die geforderte und unveränderte Winkelausrichtung einhält. Alternativ zu der durchgehenden Stützschiene 6 kann an der hinteren Abdeckung 7 eine entsprechende Führung für den Probengegenhalter 8 vorgesehen sein.

Der vorstehend beschriebene Aufbau ist auch aus Fig. 2 ersichtlich, die zeigt, wie der Probengegenhalter entlang der Stützschiene 6 in das Innere des Strömungskanals verschoben wurde. Sowohl die vordere Abdeckung 2, wie auch die hintere Abdeckung 7 sind aus einem durchsichtigen Material, wie Glas oder Plexiglas gefertigt, so dass dem Testmitarbeiter ein Blick in das Innere des Strömungskanals möglich ist.

Der durchsichtige Aufbau ist auch für eine optische Detektionseinheit notwendig, die in Fig. 8 gezeigt ist. Die optische Detektionseinheit umfasst einen Sender 9 und einen Empfänger 10 und wird verwendet, um die Delamination der Eisschicht 12 von der auf der Messprobe 5 aufgewachsenen Eisschicht 12 zu detektieren, sowie um die Masse der auf der Messprobe 5 während des Vereisungsvorganges aufgewachsenen Eisschicht 12 zu erfassen. In einem Beispiel, das nicht Teil der Erfindung ist, kann die Masse des Eises auch durch Wiegen vor und nach dem Vereisungsvorgang ohne Strömungsgeschwindigkeit bestimmt werden, beispielsweise durch Verwendung einer Präzisionswaage, die z.B. in eine an der vorderen Abdeckung 2 der Testsektion angebrachten unteren Befestigungsschelle integriert oder daran befestigt werden kann. Auch kann das Gewicht des abgeplatzten Eises gemessen werden.

In einer bevorzugten Ausgestaltung ist der Sender 9 als ein Lichtzeiger ausgeführt, wie beispielsweise durch die Verwendung einer Laserdiode. Der Empfänger 10 ist bevorzugt als ein positionsempfindlicher Photodetektor oder als 4-Quadranten Photodetektor ausgeführt. Auch kann ein optisches System mit einer Kamera und einer ausreichenden Beleuchtung verwendet werden.

Erfindungsgemäß wird die Delamination der Eisschicht 12 von der Messprobe 5 durch elektrische Messverfahren bestimmt, bei welchen die bei der Schwinganregung erzeugten Dehnungen auf der nicht vereisten Seite der Messprobe 5 erfasst und in ein elektrisches Signal umgewandelt werden. Als Beispiele für derartige elektrische Messverfahren sind die DMS-Messtechnik zu nennen, die sich durch die Verwendung von Dehnungsmessstreifen auszeichnet, oder die piezoelektrische Messtechnik, welche beispielsweise piezoelektrische Flächenwandler oder mehrlagige piezoelektrische Aktuatoren benutzt, um eine mechanische Dehnung in ein elektrisches Signal mit Hilfe des piezoelektrischen Effekts umzuwandeln.

Auch kann eine Kamera oberhalb der oberen Abdeckung 22 (siehe Fig. 2) angeordnet sein und die Veränderungen der Auslenkungen der Messprobe 5 während des Messvorgangs aufzeichnen, da ein Abplatzen der Eisschicht 12 eine Veränderung der Eigenfrequenz und somit eine Veränderung der Auslenkungen bewirkt.

Alternative oder zusätzliche optische Messverfahren können eingesetzt werden, um sowohl die Dicke als auch die Kontur der während des Vereisungsvorgangs auf der Messprobe 5 aufgewachsenen Eisschicht 12 optisch zu erfassen. Hierfür können 2D-oder 3D-Laserscanner verwendet werden. Auch kann die Dicke und die Kontur des Eises photographisch erfasst und ausgewertet werden. Auch der Zeitpunkt der Delamination der Eisschicht von der Oberfläche der Messprobe kann so exakt gemessen werden. Sowohl bei Messverfahren mit einer gleichbleibenden, wie auch ansteigenden Amplitude ist der Abplatzzeitpunkt ein wichtiger Messwert für die Adhäsion.

Die Testsektion 20 wird bevorzugt aus metallischen Werkstoffen oder aus Faserverbundwerkstoffen gefertigt, mit darin einsetzbaren durchsichtigen Boden- und Deckenplatten 22 für die Anwendung optischer Messverfahren, sowie einer durchsichtigen vorderen 2 und hinteren Seitenscheibe 7 für die Anwendung optischer Messverfahren. Optional kann in der Aussparung des Probengegenhalters 8 eine Bohrung vorgesehen werden, um dort ein Thermoelement zu platzieren, das die Temperatur auf der Rückseite der in der Längsaussparung des Probengegenhalters 8 positionierten Messprobe 5 vor und während des Vereisungsvorganges sowie während der Delamination der Eisschicht 12 von der Messprobe 5 detektiert.

In einer weiteren Ausgestaltung der Erfindung kann in der Aussparung des Probengegenhalters 8 zusätzlich eine thermische Heizung integriert werden, beispielsweise durch Einlaminieren oder Verkleben einer dünnen elektro-thermischen Heizmatte in der Längsaussparung des Probengegenhalters 8, um der Messprobe 5 während des Vereisungsvorganges thermische Energie zuzuführen. Durch diese Anpassung der Probengegenhaltergeometrie können im Flug eines Luftfahrzeugs auftretende kritische Vereisungsbedingungen durch Eispartikel, die auf einer thermisch erwärmten festen Oberfläche auftreffen, untersucht werden, und thermische Effekte während des Vereisungsvorganges auf die Eisadhäsion charakterisiert werden. Somit kann mit der vorhandenen Messapparatur die Vereisung 12 durch Eiskristalle untersucht werden, indem sich die auf der Oberfläche der Messprobe 5 auftreffenden Eispartikel durch kurzzeitige Wärmezufuhr verflüssigen und nach Beendigung der Wärmezufuhr erneut auf der Oberfläche der Messprobe 5 zu einer Vereisung 12 festfrieren.

Auch wird es möglich, direkt beim Eiswachstum die Dicke zu messen. Somit kann man reproduzierbar eine definierte Eisdicke erhalten. Da die Eisdicke einen wesentlichen Einfluss auf die Adhäsionsmessung hat, wird die Verlässlichkeit der Messergebnisse somit erhöht.

Das Verfahren zur Adhäsionsmessung kann in folgende Schritte unterteilt werden:
1. Positionieren der zu testenden Messprobe 5 in einer auf dem Probenhalter 4 vorhergesehenen Haltekontur, insbesondere einer dafür vorgesehenen Nut und das Einspannen der Messprobe 5 in dem Probenhalter 4.
2. Das Inkontakt-Bringen des Probengegenhalters 8 mit der Messprobe 5. Dies kann ein Einfahren des Probengegenhalters 8 entlang der Stützschiene 6 durch eine Aussparung in der hinteren Abdeckung 7 der Testsektion 20 umfassen.
3. Optionales Abdichten von Aussparungen in der vorderen Abdeckung 2 und/oder hinteren Abdeckungen 7 der Testsektion 20
4. Beginn der Anströmung und der Unterkühlung der Messprobe 5.
5. Start des Vereisungsvorgangs bei Erreichen stationärer Strömungsbedingungen, d.h. bei einer konstanter Geschwindigkeit und Temperatur.
6. Beenden des Vereisungsvorgangs nach Aufbringen einer definierten Eisschicht 12. Das Beenden kann über eine definierte Zeit gesteuert werden. Alternativ kann die aufgewachsene Eisschicht 12 gemessen werden. Beim Beenden des Vereisungsvorgangs endet die Anströmung der Messprobe 5, wobei aber die unterkühlte Temperatur bevorzugt unverändert bleibt, um so thermische Effekte in der Grenzfläche zwischen der Messprobe 5 und der auf ihr aufgewachsenen Eisschicht 12 zu vermeiden.
7. Entfernen des Kontakts des Probengegenhalters 8 von der Messprobe 5. Hierfür kann die Stützschiene 6 als eine Führung dienen.
8. Optisches, photographisches oder sonstiges Erfassen der Dicke und der Kontur der auf der Messprobe 5 aufgewachsenen Eisschicht 12. Dieser Schritt wird bevorzugt auch dann durchgeführt, wenn der Zeitpunkt des Beendens des Vereisungsvorgangs bereits durch ein optisches Verfahren bestimmt wurde, da durch die Entfernung des ebenfalls vereisten Probengegenhalters 8 bereits ein Teil der Eisschicht 12 der Messprobe 5 abgesprungen sein könnte.
9. Anregung der Messprobe 5 durch den Schwingungserreger 3 (bspw. einem Permanentschwinganreger) mit einem Frequenzdurchlauf und einer sehr niedrigen konstanten Anregungsamplitude, um zum einen die Masse der auf der Messprobe 5 aufgewachsenen Eisschicht 12 mit der optischen Messeinheit bestehend aus Lichtzeiger 9 und Empfänger 10 zu erfassen, und zum anderen um vorzugsweise die erste Resonanzfrequenz der vereisten Messprobe 5 zu bestimmen. Alternativ können mit dem Frequenzdurchlauf mit sehr niedriger konstanter Anregungsamplitude auch die Resonanzfrequenzen bestimmt werden, die höheren Schwingungsmoden zugeordnet sind.
10. Anregung der Messprobe 5 durch den Schwingungserreger 3 mit der in Schritt 9 vorzugsweise ermittelten ersten Resonanzfrequenz mit ansteigender Anregungsamplitude. Alternativ kann für die Anregung der Messprobe 5 auch eine einem höheren Schwingungsmode zugeordnete Resonanzfrequenz verwendet werden.
11. Detektion der Delamination der Eisschicht 12 von der Messprobe 5. Hierfür kann insbesondere eine optische Messeinheit bestehend aus Lichtzeiger und Empfänger verwendet werden.
12. Berechnung der Adhäsion zwischen der Oberfläche der Messprobe 5 und der darauf aufgewachsenen Eisschicht 12 mit den aus den Schritten 11 und 8 ermittelten Werten.

### Bezugszeichen

1 : vorderer Flansch der Testsektion
2 : vordere Abdeckung
3 : Verformungsbewirker, Schwingungserreger, Permanentschwingerreger
4 : Probenhalter
5 : Messprobe
6 : Stützschiene
7 : hintere Abdeckung
8 : Probengegenhalter
9 : Lichtquelle eines Messtrahls, Sender
10 : Photodetektor, Empfänger
12 : Eisschicht, Vereisung
20 : Testsektion
21: hinterer Flansch der Testsektion
22 : obere Abdeckung

## Patentansprüche

1. Testsektion (20), mit:
einer Messvorrichtung zur Messung der Eisadhäsion an einer Oberfläche, umfassend
eine Messprobe (5), welche die zu vermessende Oberfläche aufweist,
einen Probenhalter (4) zur Aufnahme der Messprobe (5),
einen Schwingungserreger (3) zur Erzeugung einer oszillierenden Bewegung zur Verformung der Messprobe (5),
einen Probengegenhalter (8), der eine Längsaussparung aufweist, deren Breite geringfügig breiter ist als die Breite der bestimmungsgemäß in der Messvorrichtung verwendbaren Messprobe (5) und die eine Tiefe aufweist, die im Wesentlichen der Dicke der bestimmungsgemäß in der Messvorrichtung verwendbaren Messprobe (5) entspricht, wobei der Probengegenhalter (8) für den Zeitraum eines Aufbringens einer Eisschicht (12) auf die zu vermessende Oberfläche der Messprobe (5) derart in Kontakt zu der Messprobe (5) bringbar ist, dass die Messprobe in die Längsaussparung eingesetzt ist, und wobei der Probengegenhalter (8) für das Messen der Eisadhäsion in einen Abstand zu der Messprobe (5) bringbar ist,
eine optische Detektionseinheit (9, 10) zur Messung einer Dicke einer auf der Messprobe (5) aufgebrachten Eisschicht (12) mit einem Sender (9) und einem Empfänger (10), und
eine elektrische Sensoreinrichtung zur Bestimmung einer durch die Verformung bewirkten Delamination der auf der Messprobe (5) aufgebrachten Eisschicht (12) durch Erfassung einer Dehnung der Messprobe (5), wobei die elektrische Sensoreinrichtung dazu eingerichtet ist, die bei Schwingungsanregung erzeugten Dehnungen auf einer nicht vereisten Oberfläche der Messprobe (5) zu erfassen und in ein elektrisches Signal umzuwandeln,
**dadurch gekennzeichnet, dass** die Testsektion weiterhin umfasst: einen ersten Flansch (1),
einen zweiten Flansch (21),
einen sich zwischen den Flanschen (1, 21) erstreckenden rechteckförmigem Kanal,
eine an einer Seite des Kanals angebrachte vordere entfernbare Abdeckung (2) aus einem durchsichtigen Material,
eine an einer gegenüberliegenden Seite des Kanals angebrachte hintere entfernbare Abdeckung (7) aus einem durchsichtigen Material, wobei der Schwingungserreger (3) an der vorderen Abdeckung (2) angebracht ist und einen Schwingkörper aufweist um Vibrationen in Kanallängsrichtung zu erzeugen, wobei der Probenhalter (4) an den Schwingkörper gekoppelt ist und durch die vordere Abdeckung (2) in den Kanal hineinragt, und
wobei der Probengegenhalter (8) in Kanalquerrichtung zwischen einer Position, in welcher der Probengegenhalter (8) mit der Messprobe (5) in Kontakt ist, und einer Position verschiebbar ist, in welcher der Probegegenhalter (8) weitestgehend aus dem Kanal entfernt ist und zwischen der Messprobe (5) und der hinteren Abdeckung (7) ein Spalt vorhanden ist, sodass die Messprobe (5) nach ihrer Anregung frei schwingen kann.

2. Testsektion (20) gemäß Anspruch 1, **dadurch gekennzeichnet, dass** die Frequenz der oszillierenden Bewegung derart einstellbar ist, dass sie der Eigenfrequenz der untersten oder einer höheren Ordnung einer in der Messvorrichtung aufgenommenen Messprobe (5) entspricht.

3. Testsektion (20) gemäß einem der voranstehenden Ansprüche, **dadurch gekennzeichnet, dass** die Messvorrichtung eine Temperaturmessvorrichtung, insbesondere zur Messung der Temperatur der aufgenommenen Messprobe (5) aufweist.

4. Verfahren zur Messung der Eisadhäsion an einer Oberfläche mittels einer Testsektion (20) gemäß einem der voranstehenden Ansprüche, wobei die Testsektion (20) über die Flansche (1; 21) in einen Vereisungswindkanal eingebaut ist, mit folgenden Verfahrensschritten:
Einbringen der Messprobe (5) in den sich zwischen den Flanschen (1, 21) erstreckenden Kanal, wobei die Messprobe (5) an einem äußeren Ende in den Probenhalter (4) eingespannt wird;
Anlegen des Probengegenhalters (8) an eine erste Oberfläche der Messprobe (5) durch Verschieben des Probengegenhalters (8) in Kanalquerrichtung, wobei die Messprobe (8) in die Längsaussparung des Probengegenhalters (8) eingesetzt wird; Einstellen von Bedingungen in dem Vereisungswindkanal derart, dass eine Eisschicht (12) auf einer entgegengesetzt zu der ersten Oberfläche orientierten zweiten Oberfläche der Messprobe (5) aufwächst;
Entfernen des Probengegenhalters (8) von der Messprobe (5) durch Verschieben des Probegegenhalters (8) in Kanalquerrichtung, sodass zwischen der Messprobe (5) und der hinteren Abdeckung (7) ein Spalt vorhanden ist, um eine freie Schwingung der Messprobe (5) zu erlauben und einen Kontakt zwischen dem Probengegenhalter (8) und der Messprobe (5) aufzuheben;
Erfassen der Dicke und einer Kontur der auf der Messprobe (5) aufgewachsenen Eisschicht (12) mittels der optischen Detektionseinheit (9; 10);
Verformen der Messprobe (5) durch Einbringen von Schwingungen in die Messprobe (5) mittels des Schwingungserregers (3) derart, dass eine Delamination der Eisschicht (12) von der zweiten Oberfläche der Messprobe (5) stattfindet, wobei die Schwingung bei konstanter, vorab determinierter Resonanzfrequenz der vereisten Messprobe ersten oder einer höheren Ordnung eine ansteigende Amplitude aufweist;
Bestimmen der Delamination der auf der zweiten Oberfläche der Messprobe (5) aufgewachsenen Eisschicht (12) durch Erfassung einer Dehnung der Messprobe (5) mittels der elektrischen Sensoreinrichtung; und
Berechnen der Adhäsion zwischen der zweiten Oberfläche der Messprobe (5) und der darauf aufgewachsenen Eisschicht (12) auf Basis der erfassten Dehnung der Messprobe (5) und der erfassten Dicke und Kontur der aufgewachsenen Eisschicht (12).

5. Verfahren nach Anspruch 4, wobei das Einstellen der Bedingungen in dem Vereisungswindkanal derart erfolgt, dass die zweite Oberfläche, an der die Eisschicht (12) anwächst, entgegen der Strömungsrichtung angeordnet ist.

## Claims

1. Test section (20) having:
a measuring apparatus for measuring the adhesion of ice on a surface, comprising
a measurement sample (5) having the surface to be measured,
a sample holder (4) for accommodating the measurement sample (5),
a vibration exciter (3) for generating an oscillating movement in order to deform the measurement sample (5),
a sample counterholder (8) having a longitudinal recess, the width of which is slightly wider than the width of the measurement sample (5) usable as intended in the measuring apparatus and which has a depth which corresponds substantially to the thickness of the measurement sample (5) usable as intended in the measuring apparatus, wherein the sample counterholder (8) can be brought into contact with the measurement sample (5) for the period in which a layer of ice (12) is applied to the surface of the measurement sample (5) to be measured in such a manner that the measurement sample is inserted into the longitudinal recess, and wherein the sample counterholder (8) can be brought to a distance from the measurement sample (5) for the purpose of measuring the adhesion of ice,
an optical detection unit (9, 10) for measuring a thickness of a layer of ice (12) applied to the measurement sample (5), having a transmitter (9) and a receiver (10), and an electrical sensor device for determining delamination of the layer of ice (12) applied to the measurement sample (5), which is caused by the deformation, by capturing an expansion of the measurement sample (5), wherein the electrical sensor device is configured to capture the expansions produced during vibration excitation on a surface of the measurement sample (5) without ice and to convert them into an electrical signal,
**characterized in that** the test section also comprises:
a first flange (1),
a second flange (21),
a rectangular channel extending between the flanges (1, 21),
a front removable cover (2) which is fitted to one side of the channel and is made of a transparent material,
a rear removable cover (7) which is fitted to an opposite side of the channel and is made of a transparent material, wherein the vibration exciter (3) is fitted to the front cover (2) and has a vibrating body in order to produce vibrations in the channel longitudinal direction, wherein the sample holder (4) is coupled to the vibrating body and projects through the front cover (2) into the channel, and wherein the sample counterholder (8) can be shifted in the channel transverse direction between a position, in which the sample counterholder (8) is in contact with the measurement sample (5), and a position, in which the sample counterholder (8) has been removed from the channel to the greatest possible extent and there is a gap between the measurement sample (5) and the rear cover (7), with the result that the measurement sample (5) can vibrate freely after its excitation.

2. Test section (20) according to Claim 1, **characterized in that** the frequency of the oscillating movement can be set in such a manner that it corresponds to the lowest-order or a higher-order natural frequency of a measurement sample (5) accommodated in the measuring apparatus.

3. Test section (20) according to one of the preceding claims, **characterized in that** the measuring apparatus has a temperature measuring apparatus, in particular for measuring the temperature of the accommodated measurement sample (5).

4. Method for measuring the adhesion of ice on a surface by means of a test section (20) according to one of the preceding claims, wherein the test section (20) is installed in an icing wind tunnel via the flanges (1; 21), having the following method steps of:
introducing the measurement sample (5) into the channel extending between the flanges (1, 21), wherein the measurement sample (5) is clamped into the sample holder (4) at an outer end:
applying the sample counterholder (8) to a first surface of the measurement sample (5) by shifting the sample counterholder (8) in the channel transverse direction, wherein the measurement sample (8) is inserted into the longitudinal recess of the sample counterholder (8) ;
setting conditions in the icing wind tunnel in such a manner that a layer of ice (12) grows on a second surface of the measurement sample (5) that is oriented opposite the first surface;
removing the sample counterholder (8) from the measurement sample (5) by shifting the sample counterholder (8) in the channel transverse direction, with the result that there is a gap between the measurement sample (5) and the rear cover (7), in order to allow free vibration of the measurement sample (5) and to remove contact between the sample counterholder (8) and the measurement sample (5);
capturing the thickness and a contour of the layer of ice (12) grown on the measurement sample (5) by means of the optical detection unit (9; 10);
deforming the measurement sample (5) by introducing vibrations into the measurement sample (5) by means of the vibration exciter (3) in such a manner that delamination of the layer of ice (12) from the second surface of the measurement sample (5) takes place, wherein the vibration has an increasing amplitude at a constant, previously determined first-order or higher-order resonant frequency of the iced measurement sample;
determining the delamination of the layer of ice (12) grown on the second surface of the measurement sample (5) by capturing an expansion of the measurement sample (5) by means of the electrical sensor device; and
calculating the adhesion between the second surface of the measurement sample (5) and the layer of ice (12) grown thereon on the basis of the captured expansion of the measurement sample (5) and the captured thickness and contour of the layer of ice (12) which has been grown on.

5. Method according to Claim 4, wherein the conditions in the icing wind tunnel are set in such a manner that the second surface on which the layer of ice (12) grows is arranged counter to the direction of flow.

## Revendications

1. Section de test (20), comportant :
un dispositif de mesure pour mesurer l'adhérence de la glace sur une surface, comprenant un échantillon de mesure (5) présentant la surface à mesurer,
un porte-échantillon (4) pour recevoir l'échantillon de mesure (5),
un excitateur de vibrations (3) pour générer un mouvement oscillant afin de déformer l'échantillon de mesure (5),
un contre-support d'échantillon (8) qui présente un évidement longitudinal dont la largeur est légèrement supérieure à la largeur de l'échantillon de mesure (5) pouvant être utilisé dans le dispositif de mesure conformément à sa destination et qui présente une profondeur qui correspond sensiblement à l'épaisseur de l'échantillon de mesure (5) pouvant être utilisé dans le dispositif de mesure conformément à sa destination,
dans lequel le contre-support d'échantillon (8) peut être mis en contact avec l'échantillon de mesure (5) pendant la période d'application d'une couche de glace (12) sur la surface de l'échantillon de mesure (5) à mesurer de telle manière que l'échantillon de mesure soit inséré dans l'évidement longitudinal, et dans lequel le contre-support d'échantillon (8) peut être amené à distance de l'échantillon de mesure (5) pour mesurer l'adhérence de la glace,
une unité de détection optique (9, 10) pour mesurer une épaisseur d'une couche de glace (12) appliquée sur l'échantillon de mesure (5), comportant un émetteur (9) et un récepteur (10), et
un dispositif à capteur électrique pour déterminer un décollement, provoqué par la déformation, de la couche de glace (12) appliquée sur l'échantillon de mesure (5) par détection d'un allongement de l'échantillon de mesure (5), dans lequel le dispositif à capteur électrique est conçu pour détecter les allongements produits sur une surface non givrée de l'échantillon de mesure (5) lors de l'excitation de vibrations et pour les convertir en un signal électrique,
**caractérisé en ce que** la section de test comprend en outre :
une première bride (1),
une seconde bride (21),
un conduit rectangulaire s'étendant entre les brides (1, 21),
un capot avant amovible (2) en matériau transparent fixé sur un côté du conduit,
un capot arrière amovible (7) en matériau transparent, monté sur un côté opposé du conduit, dans lequel l'excitateur de vibrations (3) est fixé au capot avant (2) et comporte un corps vibrant pour générer des vibrations dans la direction longitudinale du conduit, dans lequel le porte-échantillon (4) est couplé au corps vibrant et fait saillie dans le conduit à travers le capot avant (2), et
dans lequel le contre-support d'échantillon (8) peut être déplacé dans la direction transversale au conduit entre une position à laquelle le contre-support d'échantillon (8) est en contact avec l'échantillon de mesure (5) et une position à laquelle le contre-support d'échantillon (8) est sensiblement éloigné du conduit, et un interstice est présent entre l'échantillon de mesure (5) et le capot arrière (7) de manière à ce que l'échantillon de mesure (5) puisse osciller librement après avoir été excité.

2. Section de test (20) selon la revendication 1, **caractérisée en ce que** la fréquence du mouvement oscillant peut être réglée de telle manière qu'elle corresponde à la fréquence propre d'ordre le plus bas ou le plus haut d'un échantillon de mesure (5) reçu dans le dispositif de mesure.

3. Section de test (20) selon l'une des revendications précédentes, **caractérisée en ce que** le dispositif de mesure comprend un dispositif de mesure de température, en particulier pour mesurer la température de l'échantillon de mesure (5) reçu.

4. Procédé de mesure de l'adhérence de la glace sur une surface au moyen d'une section de test (20) selon l'une des revendications précédentes, dans lequel la section de test (20) est montée dans un conduit de soufflerie de givrage par l'intermédiaire des brides (1 ; 21), comportant les étapes de procédé suivantes :
introduire l'échantillon de mesure (5) dans le conduit s'étendant entre les brides (1, 21), dans lequel l'échantillon de mesure (5) est fixé à une extrémité extérieure dans le porte-échantillon (4) ;
appliquer le contre-support d'échantillon (8) sur une première surface de l'échantillon de mesure (5) en déplaçant le contre-support d'échantillon (8) dans la direction transversale au conduit, dans lequel l'échantillon de mesure (8) est inséré dans l'évidement longitudinal du contre-support d'échantillon (8) ;
régler des conditions dans le conduit de soufflerie de givrage de telle manière qu'une couche de glace (12) se forme sur une seconde surface de l'échantillon de mesure (5), laquelle est orientée à l'opposé de la première surface ;
retirer le contre-support d'échantillon (8) de l'échantillon de mesure (5) en déplaçant le contre-support d'échantillon (8) dans la direction transversale au conduit de telle manière qu'un interstice soit présent entre l'échantillon de mesure (5) et le capot arrière (7) pour permettre une vibration libre de l'échantillon de mesure (5) et pour éviter tout contact entre le contre-support d'échantillon (8) et l'échantillon de mesure (5) ;
détecter l'épaisseur et le contour de la couche de glace (12) qui s'est formée sur l'échantillon de mesure (5) au moyen de l'unité de détection optique (9 ; 10) ;
déformer l'échantillon de mesure (5) en injectant des vibrations dans l'échantillon de mesure (5) au moyen de l'excitateur de vibrations (3) de telle manière qu'il se produise un décollement de la couche de glace (12) de la seconde surface de l'échantillon de mesure (5), dans lequel l'oscillation présente une amplitude croissante à une fréquence de résonance constante, préalablement déterminée, du premier ordre ou d'un ordre supérieur, de l'échantillon de mesure givré ;
déterminer le décollement de la couche de glace (12) qui s'est formée sur la seconde surface de l'échantillon de mesure (5) en détectant un allongement de l'échantillon de mesure (5) au moyen du dispositif à capteur électrique ; et
calculer l'adhérence entre la seconde surface de l'échantillon de mesure (5) et la couche de glace (12) qui s'y est formée sur la base de l'allongement détecté de l'échantillon de mesure (5) et de l'épaisseur et du contour détectés de la couche de glace (12) formée.

5. Procédé selon la revendication 4, dans lequel le réglage des conditions dans le conduit de soufflerie de givrage s'effectue de telle manière que la seconde surface sur laquelle se forme la couche de glace (12) soit disposée en sens opposé à la direction d'écoulement.
